# EUROPEAN PATENT APPLICATION

(11) **EP 2 305 747 A1**
(43) Date of publication of application: **06.04.2011**
(21) Application number: 09793982.1
(22) Date of filing: 08.07.2009
(51) Int. Cl.: C08K 3/34, C08K 7/26, C08K 9/06, C01B 33/44, C08J 5/00

(54) **POLYMERIC MATRIX NANOCOMPOSITE MATERIALS HAVING IMPROVED MECHANICAL AND BARRIER PROPERTIES AND PROCEDURE FOR PREPARING SAME**

(30) Priority: 08.07.2008 ES 200802035
(71) Applicant: Nanobiomatters, S.L., 46980 Paterna (Valencia) (ES)
(72) Inventor: GIMÉNEZ TORRES, Enrique, E-46980 Paterna (Valencia) (ES); LAGARON CABELLO, José María, E-46980 Paterna (Valencia) (ES); VILLANUEVA REDON, María Pilar, E-46980 Paterna (Valencia) (ES)
(74) Representative: Pons Ariño, Maria Purificación
(86) International application number: PCT/ES2009/070277
(87) International publication number: WO 2010/004074

(57) **Abstract**

The present invention relates to nanocomposite materials based on a polymeric or plastic matrix and a laminar silicate (clay) having improved mechanical, thermal and gas-barrier properties, among others, and not requiring clay-matrix compatibilizing agents. Furthermore the present invention relates to three procedures for the obtainment of these materials and use thereof for applications such as in packaging products of interest to the food sector, among others and for applications in other sectors.

## Description

### TECHNICAL FIELD OF THE INVENTION

The present invention relates to nanocomposite materials based on a polymeric or plastic matrix and a layered silicate (clay). The nanocomposites prepared have improved mechanical properties (e.g. rigidity, resistance to breakage), improved thermal properties (e.g. greater thermal stability) and improved gas and vapour barrier properties (e.g. to oxygen, water vapour, aromas) and do not require clay-matrix compatibilizing agents. They also have by default a barrier to electromagnetic radiation in UV, Vis and IR and fire resistance, maintaining high transparency levels and they use substances permitted for food, pharmaceutical and biomedical contact. The application of these nanocomposites is multi-sectorial, such as, for example, their advantageous application both in the packaging of products of interest for food and for applications in other sectors.

In this same sense, the present invention relates to several processes for the preparation of these same nanocomposite materials.

The nanocomposite materials once prepared can be transformed into the end product by any transformation process of plastics, such as and without limitation, moulding by blowing, by injection, by extrusion or by thermoforming.

### BACKGROUND OF THE INVENTION

At present, polymer/clay nanocomposites based on polyamide 6 (PA6) are marketed for applications related to the automotive industry or high-barrier packaging. Polyamide 6 is a semicrystalline thermoplastic that has good mechanical resistance, tensile strength and high resistance to impact; it has good behaviour to sliding, improved with the MoS₂ aggregate, it also has good resistance to wear; for this reason it is suitable as an engineering plastic of universal use, in mechanical constructions and industrial maintenance work.

Nanocomposites based on polyolefins are receiving special attention in the research world due to the wide range of uses of this type of polymers, as well as the good properties of these materials, mainly their low cost, good processing and recycling capacity. Conventional compounds (microcompounds) of several polyolefins are already used in industry, but the addition of a low content of charges dispersed in the polymer with at least a dimension in the order of nanometres makes it possible to achieve an improvement in the end properties of the material (nanocomposite) which is impossible to obtain with conventional charges. Thus, it can improve properties such as the mechanical, thermal or gas barrier properties.

In recent years, the interest for the exfoliation of clays of smectite type (such as montmorillonite) in all type of polymeric matrices has grown exponentially due, on the one hand, to the great aspect ratio of the layers forming this type of layered silicates and, on the other, to the great availability of this type of charge compared to others. In general, clays in their natural state (without modifications) have a highly hydrophilic character and are only miscible with very hydrophilic matrices such as polyethylene oxides (PEO) or polyvinyl alcohol (PVOH). On many occasions, mixing with some polymers gives rise to a completely immiscible system. Therefore, these clays have been modified with surfactants (such as ammonium salts) to make them more similar to the polymeric matrices. Furthermore, this modification manages to increase the interlayer spacing (basal) of the clay. Therefore, the size of the surfactant chains is of great influence in obtaining a greater or lesser basal spacing on modifying the clay. But in polyolefin matrices this is not sufficient to achieve a good exfoliation of the layers of clay by melt mixing.

In the case of polyolefins, such as polypropylene and polyethylene, their non-polar nature means that there is no affinity between the polymeric chains (with hydrophobic character) and the clay (with hydrophilic character). To improve this compatibility problem, many methods have been proposed in recent years. One of them is to functionalize the polymeric matrix with functional polar groups via the use of a catalyst. Another possibility would be the addition of a percentage of compatibilizer (already functionalized polyolefin) to the polymer and clay system, (e.g. Morawiec et al. Eur. Pol. J. 2005, 41, 1115). In recent years, some authors (López-Quintanilla et al.; Journal of Applied Polymer Science, 2006, 100, 6, 4748) have used the route of dispersing clay in a matrix that is 100% functionalized with polar groups to obtain a masterbatch with a high clay content and later dilute it by melt mixing it with polyolefin. These three methods have been employed mainly with the use of clays of smectite type. These clays have been previously treated with surfactants or other organic substances for the surface modification of the clay and to make it hydrophobic (character more similar to polyolefins), ammonium salts being the modifier most employed up to now. These methods, in addition to making the end product more expensive due to the use of compatibilizers (more expensive than the polyolefin matrix), may have incompatibilities with some applications of the end materials as is the case of food packaging, since substances are used to modify the clays that are not approved for food contact.

The availability of functionalized polyolefins is highly limited due to the chemical difficulties that arise during functionalization. Many studies based on polyolefin nanocomposites have used a polyolefin functionalized with maleic anhydride (MA) as this is the most available to date. But these polyolefins functionalized with MA have a complicated molecular structure as a consequence of the impurities that may remain and from the lateral reactions, including the degradation of the chains that occur during the grafting process of the free radicals. Hence, other authors have sought alternative ways of compatibilizing the polyolefin matrix with the clay.

For example, patent US20050014905A1 proposes the use of functionalized polyolefins with hydrophilic terminal functional groups to be able to even exfoliate clay in its natural state (which has not been treated with organic surfactants or other acids) and to be able to later mix this batch with pure polyolefin conserving the exfoliated structure resulting from mixing the clay with the functionalized matrix.

Patent US 006864308B2 has used intercalating agents (esters of hydroxyl substituted carboxylic acids and hydroxyl substituted amides), which are solid at ambient temperature, to treat clays of the smectite group (modified or not modified with organic salts) before melt mixing them with a polyolefin.

Patent US 005910523A has treated nanometric charges with aminosilanes before being mixed with a maleated or carboxylated polyolefin matrix, with the object of favouring the interactions between the functionalized surface of the clay and the carboxyl or maleate groups. The mixing of the charge and the maleated polyolefin matrix has been performed by the dissolution of both components in xylene at 120 ºC.

Patent US 006838508B2 discloses a new process to modify clays of smectite type such as the intercalation of a quaternary ammonium ion with at least a terminal reactive group and a -Si-O-Si group. Here it discloses how, after the modification, the clay is mixed with a polyolefin matrix compatibilized with maleic anhydride by the dissolution of both components in toluene in high temperature conditions during a certain time. This batch obtained by dissolution is later mixed with polyolefin to obtain the final nanocomposite.

In short, it can be observed that until now, in studies referring to nanocomposites of polyethylene or other polyolefins, modifications have been used of the clay with quaternary ammonium salts of the type wherefrom several hydrocarbons hang which in many cases are not substances allowed to be in contact with food, and therefore, they are not suitable for applications in food packaging. Likewise, they are also salts which undergo heat degradation at temperatures below those used during the processing to transform the nanocomposite into the end product. On the other hand, other methods proposed by some authors are based on the use of toxic solvents (toluene, xylene, etc) to dissolve polymer plus clay and thus optimize the interactions between both components and maximize the degree of improvement in the final properties of the nanocomposite (generally mechanical), but these methods are contaminating from an environmental and health standpoint, whilst being prohibited for certain final applications. Together with these factors, the use of compatibilizers or of functionalized polymeric matrices does not make the product cheaper and at times harms the properties of the pure material, and the preparation of polyolefin nanocomposites using two steps (two melting processes, a melt masterbatch plus later melt processing, etc.) involves a greater consumption of the energy resources than those processed, for example, in a single step.

Some authors have used solvents such as water to prepare nanocomposites by extrusion. In the study by Kato et al. (Pol. Engineering and Sci. 2004, 44, 7, 1205), water is injected during the extrusion of polypropylene nanocomposites with unmodified montmorillonite clay but, together with the supply of polypropylene, they add 30% by weight of compatibilizer (polypropylene functionalized with maleic anhydride) and a small quantity of a quaternary ammonium salt. Therefore, the exfoliation and the improvements in the properties observed cannot be associated with an effect of water injection in one of the sections of the extruder. Patent US 006350805B1 discloses a method to prepare nanocomposites of polyamide-montmorillonite by melt mixing from the use of solvents such as water to favour the dispersion of the clay and improve the mechanical properties as well as the heat dispersion temperature.

### DESCRIPTION OF THE INVENTION

The present invention discloses nanocomposite materials with polymeric or plastic matrix and a layered silicate (clay).The nanocomposites prepared have improved mechanical properties (e.g. rigidity, resistance to breakage), improved thermal properties (e.g. greater thermal stability) and improved gas and vapour barrier properties (e.g. to oxygen). Furthermore, these nanocomposites also have a barrier to electromagnetic radiation, provide fire resistance and impact to a minimal extent transparency. Finally, they are composed of materials permitted by legislation for food, pharmaceutical and biomedical contact and do not require clay-matrix compatibilizing agents.

Therefore, a first essential aspect of the present invention relates to new nanocomposite materials that comprise at least the following:
a) A layered silicate.
b) A polymeric or plastic matrix.

In this same sense, the layered silicate is a clay selected from the group formed by the dioctahedral or trioactahedral family, of kaolinite, gibbsite, dickite, nacrite, halloysite, montmorillonite, micaceous, vermiculite or sepiolite nature, and more preferably of kaolinite nature. Preferably, the layered silicate is a clay from the family of type 1:1, which is composed of a tetrahedral layer of silicate (with a practically zero degree of substitution of silicon by other cations) bonded to a dioctahedral layer of gibbsite type. The chemical formula of this material is typically Al₂Si₂O₅(OH)₄.

The percentage of layered silicate in the nanocomposite in the clay polymer is from 0.05% to 98% by weight, the percentage being dependent on the desired final properties of the nanocomposite material. Typically, the percentage of clay is between 0.01% and 98% and, more preferably, from 0.05 to 40%.

With respect to the polymeric matrix, it can be selected from any type, thermoplastics, thermostable materials and elastomers such as polyolefins, polyesters, polyamides, polyimides, polyketones, polyisocyanates, polysulfones, styrenic plastics, phenol resins, amide resins, ureic resins, melamine resins, polyester resins, epoxydic resins, polycarbonates, polyvinyl pyrrolidones, epoxy resins, polyacrylates, rubbers and gums, polyurethanes, silicones, aramides, polybutadiene, polyisoprenes, polyacrylonitriles, PVDF, PVA, PVOH, EVOH, PVC, PVDC or derivatives of biomass and biodegradable materials such as proteins, polysaccharides, lipids and biopolyesters or mixtures of all of these and they may contain all types of additives typically added to plastics to improve their manufacturing and/or processing or their properties. Although they will more preferably be selected from the group of polyolefins, preferably of the type of high density polyethylene (HDPE), low density polyethylene (LDPE), linear low density polyethylene (LLDPE), ultra high density polyethylenes, metallocene polyethylenes and particularly ultra low density polyethylenes, polypropylene (PP), ethylene copolymers, polyethylenes functionalized with polar groups and ionomers of ethylene or any combination thereof. Preferably, polyolefins will be selected from the type of high density polyethylene (HDPE), low density polyethylene (LDPE), linear low density polyethylene (LLDPE) and all their families of polypropylenes (PP) and their copolymers.

According to a preferred embodiment, the matrix may additionally incorporate agents or substances, including any nanoadditive or concentrate of nanoadditives thereof described in this document or of other nanoclays, with barrier properties to electromagnetic radiation, fire resistance or active and/or bioactive substances.

Typically, the percentage of polymeric matrix against the quantity of clay nanoadditive is between 2 and 99.9%, preferably between 60% and 99.9%.

These new nanocomposite materials are **characterized in that** they significantly improve properties such as rigidity and mechanical resistance, resistance to breakage or in the heat stability of the polymer base, as well as improvements in gas and vapour barrier properties, in the barrier to electromagnetic radiation and in fire resistance. All these improvements are due to the morphology obtained which is formed by a combination of structures (intercalation, exfoliation and aggregation) where the dispersed particles are in the order of a few nanometres.

A second essential aspect of the present invention relates to three different processes to obtain the same nanocomposite material, with the same properties and characteristics described above. These processes are:
1) Mixing of the components in solution which, without being limiting in nature, comprises the stages of:
   a) Dissolving a polymeric matrix in an organic solvent or in a typically used mixture, preferably based on xylene and benzonitrile.
   b) Maintaining in a range of temperatures between 40ºC and 350ºC with stirring until completely dissolving the polymer matrix.
   c) Adding a layered silicate in powder or in dispersion in the same or another solvent.
   d) Maintaining the solution with intense stirring in order to guarantee the intercalation of the polymeric chains between the layers of the layered silicate.
   e) Precipitating the dispersion in an organic solvent, preferably tetrahydrofurane (THF) and separating to obtain a concentrate of the clay nanoadditive in the plastic matrix.
2) In-situ polymerization which, without being limiting in nature, comprises the stages of:
   a) Dispersing the layered silicate in the solvent to be used in the reactor or in another compatible one.
   b) Adding the monomer or solution of monomers of the polymeric matrix.
   c) Introducing in a polymerization reactor together with a catalyst which, without being limiting in nature, may be of Ziegler-Natta type -TiCl₃/AlR₃/MgCl₂, Phillips type (Cr/SiO₂) or metallocenes-compounds derived from transition metals such as titanium, zirconium or hafnium.
   d) Activating the polymerization process by, without being limiting in nature, different processes such as temperature, pressure, UV light, etc.
   e) Intercalating the polymer chains under growth in the interlayer spacing of the silicate and recovering the clay concentrate in the polymer according to processes typically used both on a laboratory level and on an industrial scale.
3) Melt mixing which, without being limiting in nature, comprises the stages of:
   a) Melting the polymeric matrix and any additive of aid in the hot processing of the plastic and/or to give it certain properties, at a temperature above its melting point in a mechanical mixer (range between 40 ºC and 350 ºC), preferably of a Banbury type or in an extruder. Heating the polymeric matrix until melting point or softening point in a mechanical mixer or in a kneading machine, preferably of the internal mixing type or any batch or extruder system.
   b) Applying sufficiently high rotation rates (from 1 rpm to 2000 rpm) to generate sufficient shear.
   c) Adding a layered silicate in the form of dry or damp powder without surface modification, and more preferably in a suspension of a solvent (it acts as a suspension medium of the layered silicate and its function is to maintain the clay exfoliated when introducing it in the plastic matrix) of the group formed by water, aliphatic hydrocarbons, alicyclic hydrocarbons, aromatic hydrocarbons, halogenated hydrocarbons, glycols, ethers, glycol ethers, esters, ketones, nitriles, alcohols or any mixture thereof. Preferably, water or alcohols of low molecular weight are selected due to the fact that they are not harmful for health or the environment, and which are more compatible with natural clays, and are also easily available and do not cause harm during the process and do not damage the properties of the pure material. The dispersion can be performed with the aid of mechanical stirring or homogenization (ultraturrax, ultrasound, etc.) and temperature control. The percentage of solvent used in relation to the clay is between 1% and 99.99% by weight, preferably between 5% and 80% and more preferably between 10% and 60% by weight.
      The ratio of the clay-solvent(s) system over the quantity of polymer is between 0.01% and 98% and more preferably between 1% and 70%.
   d) Mixing all the components in a melted stated and in high shear conditions to generate the breakage of the clay aggregates and the introduction of polymer chains between the layers of layered silicate during a residence time that does not exceed degradation of the polymer.

In a later stage and starting from the concentrate of clay obtained by any of the three aforementioned manufacturing methods, the clay concentrate can be processed, for example, to obtain gravel, by any plastic manufacturing method together with additives typically used to formulate or process plastics or alternatively it can be added to the same or another plastic matrix by any plastic processing method and adding any additive typically added in the formulation or processing of plastics.

An alternative step that is also envisaged is the addition, to the matrix during any stage of the processes previously described, of any other additive, including any nanoadditive or concentrate of nanoadditives thereof described above or from other nanoclays, typically used as a barrier to electromagnetic radiation and/or of fire resistance and/or active and/or bioactive.

A last fundamental aspect of the present invention relates to the use of new nanocomposite materials in different sectors or for different applications due to their improved properties, as previously described and, without being limiting in nature, such as:
- Packaging and wrapping materials either with improved mechanical, thermal and/or barrier properties or to reduce the thickness thereof, e.g. to reduce the consumption of plastic packaging, given the better properties presented thereby,

- In automotive parts or in biomedical applications
- Gas sensors designed to detect harmful gases or aromas which characterize the quality of drinks and food products.
- High performance photovoltaic systems for the conversion of solar energy.
- To release active principles.
- Fire resistance and barrier to electromagnetic radiation
- As barrier materials to gases, solvents and organic products.
- For applications of biodegradable or compostable character.
- For active containers that require antimicrobial, antioxidant or any other type that requires the controlled release of low molecular weight substances including bioactive substances.
- For the use of biopolymers without the need for plasticizing agents, or requiring smaller quantities thereof.
- New materials for a high resistance/mass ratio for aerospace and biomedical applications and in means of transport.
- For surface coatings with resistance to corrosion, scratching and wear.
- As cutting tools with high tensile strength and reduced fragility.

### BRIEF DESCRIPTION OF THE DRAWINGS

Below, the invention is described with reference to the attached figures, wherein:
Figure 1 is a SEM (Scanning electron microscopy) image of a sample of LDPE (Low Density Polyethylene) nanocomposite with 7% by weight, approximately, of natural kaolinite clay without modifications incorporated in the polyethylene melt system in an ethanol solution.
Figure 2 is a SEM (Scanning electron microscopy) image of a sample of LDPE (Low Density Polyethylene) nanocomposite with 7% by weight, approximately, of natural montmorillonite clay without modifications incorporated in the polyethylene melt system in an ethanol solution.
Figure 3 is a SEM (Scanning electron microscopy) image of a sample of LDPE (Low Density Polyethylene) nanocomposite with 7% by weight, approximately, of montmorillonite clay modified with ammonium salts (Cloisite^{®}20A) and added to the melt polymer in the form of powder.

All the above characteristics and advantages, as well as others typical of the invention, can be better understood with the following examples. On the other hand, the examples do not have a limiting character but are illustrative so that the present invention can be better understood.

### EXAMPLES

### Example 1:

The formation of nanocomposites formed by a low density polyethylene which incorporate a kaolinite clay has been performed (which until now had not previously been used by other authors in polyolefin nanocomposites). Said clay is added to the melt system dispersed in a polar solvent, typically water or alcohols. To highlight the novelty of the invention, the results obtained were compared with nanocomposites prepared from the incorporation of a clay of montmorillonite nature modified with ammonium salts and also those prepared with natural montmorillonite clay (without surface modification treatment). This comparison is important as the clay principally used in polyethylene (and also polypropylene) nanocomposites is of montmorillonite type.

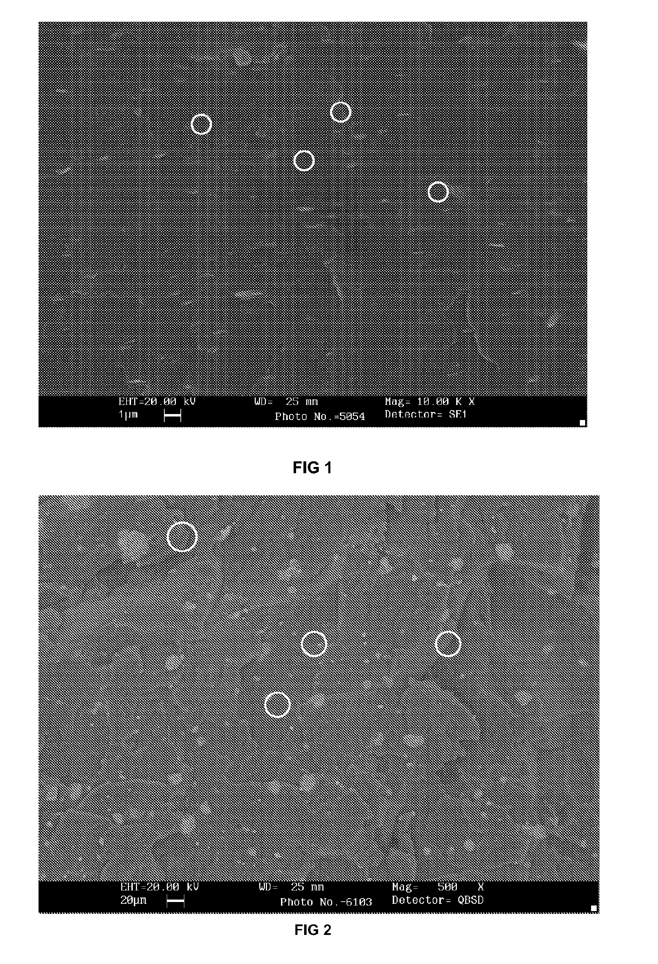

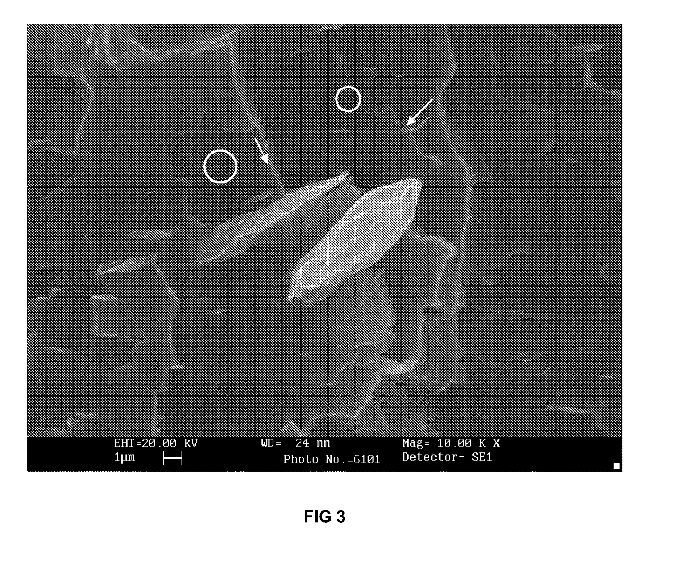

After obtaining the nanocomposites formed by LDPE with 7% by weight of kaolinite (K) clay content (Figure 1) without modifications and incorporated in the melted polyethylene system in an ethanol solution, they are compared with a sample with just LDPE, with a sample of LPDE nanocomposite with 7% by weight, approximately, of natural montmorillonite (MMT) clay without modifications (Figure 2) incorporated in the polyethylene melt system in an ethanol solution and a sample of LPDE nanocomposite with 7% by weight, approximately, of montmorillonite (oMMT) clay modified with ammonium salts (Cloisite^{®}20A) (Figure 3) and added to the melted polymer in the form of powder.

A morphological analysis is carried out for each of the samples using scanning electron microscopy (SEM) and the differences were observed in the type of clay dispersion and the final aggregate size. On adding the unmodified montmorillonite clay dispersed in a solvent such as ethanol or water, a typical morphology is obtained of a microcompound (conventional compound) with large clay aggregates (formed by hundreds and thousands of clay layers) of several microns, up to aggregates of more than 20 µm. The montmorillonite clay modified with commercial salts (Cloisite^{®}20A) achieves dispersion, partly, in small aggregates of large aspect ratio and in the size of the nanometres, but part of the clay remains aggregated, forming large tactoids of several microns. However, on adding the untreated kaolinite clay, object of this invention, a nanocomposite is obtained in suspension where all the particles are homogeneously dispersed in the order of nanometres in the form of small tactoids (formed by a reduced number of layers). Due to these differences in morphologies, positive differences are found in the nanocomposites prepared by the addition of kaolinite via liquid to the plastic.

As is observed in the mechanical results shown in table 1, a greater dispersion of the clay involves a greater increase in rigidity (elastic modulus E), in the yield stress (σ_{y}) and in the breaking strength of the sample (σᵣₒₜ), whilst not reducing to a large extent the tensile strength (εᵣₒₜ) of the material thanks to the small size of the particles. The heat stability (or start of the degradation of the nanocomposite, T_{0.1}, which shows the temperature at which 10% of the initial material has degraded) is extraordinarily improved, by the addition of kaolinite in dispersion. Table 2 shows the values of the oxygen permeability, where it is also possible to observe how a greater dispersion of the clay leads to a greater reduction in gas permeability, in particular to oxygen.

**Table 1.**

| **Sample** | σ**_{y} (MPa)** | **E (MPa)** | **σᵣₒₜ (MPa)** | **εᵣₒₜ** | **T_{0.1} (**º**C)** |
|---|---|---|---|---|---|
| **LDPE** | 6.10 | 109.53 | 9.38 | 353 | 343.33 |
| | (±0.11) | (±12.60) | (±1.30) | (±103) | |
| **LDPE-K (s)** | 8.11 | 240.84 | 11.10 | 334 | 375.33 |
| | (±0.10) | (±13.04) | (±0.30) | (±36) | |
| **LDPE-MMT (s)** | 8.00 | 220.38 | 7.51 | 56 | 348.25 |
| | (±0.07) | (±5.43) | (±1.13) | (±13) | |
| **LDPE-oMMT** | 6.55 | 178.76 | 9.45 | 310 | 359.33 |
| **(p)** | (±0.23) | (±15.32) | (±0.31) | (±38) | |

**Table 2.**

| **Sample** | **Oxygen permeability (m³m/m²sPa)** |
|---|---|
| **LDPE** | 2.39.10⁻¹⁷ |
| **LDPE-K (s)** | 1.65.10⁻¹⁷ |
| **LDPE-MMT (s)** | 1.92.10⁻¹⁷ |
| **LDPE-oMMT** | 1.78.10⁻¹⁷ |
| **(p)** | |

## Claims

1. Nanocomposite materials **characterized in that** they comprise the following elements:
a. a layered silicate; and
b. a polymeric or plastic matrix.

2. Nanocomposite materials according to claim 1, **characterized in that** the layered silicate is a clay selected from the group formed by the dioctahedral or trioactahedral family.

3. Nanocomposite materials according to claim 2, **characterized in that** the layered silicate is selected from silicates of kaolinite, gibbsite, dickite, nacrite, halloysite, montmorillonite, micaceous, vermiculite or sepiolite nature.

4. Nanocomposite materials according to claim 3, **characterized in that** the layered silicate is of kaolinite nature.

5. Nanocomposite materials according to any of claims 1 to 4, **characterized in that** the layered silicate is in a percentage of 0.05% to 98% by weight with respect to the other components.

6. Nanocomposite materials according to claim 5, **characterized in that** the layered silicate is in a percentage of 0.05% to 30% by weight.

7. Nanocomposite materials according to claim 6, **characterized in that** the layered silicate is in a percentage of 0.05% to 15% by weight.

8. Nanocomposite materials according to any of claims 1 to 7, **characterized in that** the polymeric or plastic matrix is selected from the group formed by thermoplastics, thermostable materials or elastomers.

9. Nanocomposite materials according to claim 8, **characterized in that** the polymeric or plastic matrix is selected from the group of polyolefins.

10. Nanocomposite materials according to any of claims 1 to 9, **characterized in that** the matrix is found in a proportion from 2% to 99.9% by weight.

11. Nanocomposite materials according to claim 10, **characterized in that** the matrix is found in a proportion from 60% to 99.9% by weight.

12. Process for the preparation of the nanocomposite materials according to claims 1 to 11, **characterized in that** it comprises the following stages:
a. dissolving the polymeric matrix;
b. adding a layered silicate and stirring the mixture;
c. precipitating with an organic solvent and separating the product obtained

13. Process according to claim 12, **characterized in that** in stage (a) the polymeric matrix is dissolved in an organic solvent.

14. Process according to any of claims 12 or 13, **characterized in that** the dissolution of the matrix in stage (a) is performed at a temperature within the range from 40 ºC to 350 ºC.

15. Process according to any of claims 12 to 14, **characterized in that** the addition of the layered silicate in stage (b) is in powder or in solution in the same or another solvent.

16. Process according to any of claims 12 to 15, **characterized in that** the precipitation of stage (c) is carried out with THF.

17. Process for the preparation of the nanocomposite materials according to claims 1 to 11, **characterized in that** it comprises the following stages:
a. dispersing a layered silicate in a solvent;
b. adding a monomer or solution of monomers of the polymer forming the matrix;
c. adding a catalyst;
d. activating the polymerization and post-polymerization process until obtaining the desired molecular weight.

18. Process according to claim 17, **characterized in that** the catalyst added in stage (c) is selected from the Ziegler-Natta type, Phillips type or metallocenes.

19. Process for the preparation of the nanocomposite materials according to claims 1 to 11, **characterized in that** it comprises the following stages:
a. melting the polymer forming the matrix;
b. adding a layered silicate in the form of dry powder or in liquid suspension without surface modification;
c. homogenizing all the components by a melt mixing process

20. Process according to claim 19, **characterized in that** the layered silicate is added to a suspension of a solvent which is selected from the group formed by water, aliphatic hydrocarbons, alicyclic hydrocarbons, aromatic hydrocarbons, halogenated hydrocarbons, glycols, ethers, esters, ketones, nitriles, alcohols or any mixture thereof.

21. Process according to claims 12 to 20, **characterized in that** after obtaining a concentrate of the layered silicate in the plastic matrix or the final desired concentration of the layered silicate in the matrix, they are well diluted with the same or another virgin polymer or plastic or are directly processed by any plastic manufacturing method.

22. Process according to any of claims 12 to 21, **characterized in that** an additivation of the plastic matrix is carried out with any additive, nanoadditive or concentrate of nanoadditives or nanoclays, with barrier properties to electromagnetic radiation and/or of fire resistance and/or active and/or bioactive.

23. Use of the nanocomposite materials according to claims 1 to 11, as packaging and wrapping materials, for pharmaceutical and biomedical applications, as gas sensors to detect harmful gases or aromas that characterize the quality of drinks and food products, as high performance photovoltaic systems for the conversion of solar energy, to release active principles, as barrier to solvents and organic products, for applications of biodegradable or compostable character, for active containers that require antimicrobial, antioxidant or any other type that requires the controlled release of low molecular weight substances, for the use of biopolymers without the need for plasticizing agents, for new materials that require a high resistance/mass ratio for aerospace, biomedical and in means of transport, for surface coatings with resistance to corrosion, scratching and wear, as cutting tools with high tensile strength and reduced fragility, as flame retardants in fire resistant applications or as automotive parts or in biomedical applications.
